# EUROPEAN PATENT APPLICATION

(11) **EP 2 378 465 A1**
(43) Date of publication of application: **19.10.2011**
(21) Application number: 10003897.5
(22) Date of filing: 13.04.2010
(51) Int. Cl.: G06K 9/62, G06K 9/00, G01C 21/32, G08G 1/16

(54) **Driver assisting system and method for a motor vehicle**

(71) Applicant: Autoliv Development AB, 447 83 Vårgårda (SE)
(72) Inventor: Wenner, Patrik Lars Jonatan, 58644 Linköping (SE)
(74) Representative: Müller Verweyen

(57) **Abstract**

A driver assisting system (10) for a motor vehicle comprises an imaging means (11) for recording images from a region surrounding the motor vehicle, a real-time processing means (15) for detecting objects in the recorded images by real-time image processing of images recorded by said imaging means (11), and a driver assisting means (18) controlled depending on said image processing. The vision system (11) comprises a memory (25) for storing object data relating to detected objects, and a non-real-time evaluating means (17) for evaluating said stored object data, wherein said real-time processing means (15) is adapted to influence, based on an evaluation result from said evaluating means (17), the real-time-processing in said real-time processing means (15).

## Description

The invention relates to a driver assisting system for a motor vehicle, comprising an imaging means for recording images from a region surrounding the motor vehicle, a processing means for detecting objects in the recorded images by real-time image processing of images recorded by said imaging means, and a driver assisting means controlled depending on said image processing. Furthermore, the invention relates to a corresponding driver assisting method.

In vision systems, which are known for example from US 7 158 664 B2, obtaining false detections cannot be completely avoided. However, false detections lower the trusting of the driver in the vision system and may even cause the driver to turn the vision system off. False detections become particularly annoying if the same route is repeatedly driven many times, for example between home and work, and the same object, for example a traffic sign, is always again falsely detected for example as a pedestrian and correspondingly displayed on a display.

The object of the invention is to provide a driver assisting system and method where the probability of false detections is reduced.

The invention solves this object with the features of the independent claims. The non-real-time evaluation allows a more thorough investigation of detected objects, in particular a more reliable classification, because the non-real-time processing resources and available processing times are much higher than for real-time processing. The non-real-time processing result is then used in the real-time processing in order to improve the detection and/or classification reliability, and to reduce the probability of false detections accordingly.

Preferably the non-real-time evaluating means is adapted to classify evaluated objects as belonging to at least one object category. This enables in particular to improve the results of a real-time classification. In this respect, the processing means preferably is adapted to compare the non-real-time classification by the evaluating means to a real-time classification of the evaluated object. The real-time processing in said real-time processing means may then advantageously be influenced if the classification by said evaluating means deviates from the classification by said real-time processing means.

The influencing of the real-time processing in said real-time processing means based on an evaluation result from said evaluating means may be accomplished in different ways. In a preferred embodiment, the evaluating means is adapted to make evaluation information relating to evaluated objects available to the real-time processing means, in particular by storing it in the memory means. This evaluation information allows the said real-time processing means to check detected objects in real-time. The real-time processing means may preferably be adapted to overrule a classification by the real-time classifying means if said evaluation information indicates that the detected object has been misclassified by the real-time classifying means. In addition or alternatively, the real-time processing means may preferably be adapted to suppress displaying information relating to a detected object if said evaluation information indicates that the detected object has been misclassified by said real-time classifying means.

In another embodiment, influencing of the real-time-processing based on the evaluation result is accomplished by modifying a real-time classifying means on the basis of the evaluation result. In particular, the parameters of a classifying algorithm in the real-time classifying means may be modified on the basis of the evaluation result.

Preferably the above mentioned evaluating information comprises an identifying feature of a particular evaluated object; and the processing means is preferably adapted to determine an identifying feature related to a particular detected object. In this case, the processing means is preferably adapted to compare an identifying feature related to a detected object to an identification feature of an evaluated object. The processing means may then advantageously be adapted to use, in the processing of a detected object, an evaluation result related to an evaluated object if the identifying feature related to the detected object corresponds to the identification feature of the evaluated object.

In the following the invention shall be illustrated on the basis of preferred embodiments with reference to the accompanying drawings, wherein:
- Fig. 1: shows a schematic view of a driver assisting system for a motor vehicle;
- Fig. 2: shows a schematic view of a processing means according to one embodiment of the invention; and
- Fig. 3: shows a schematic view of a processing means according to another embodiment of the invention.

The driver assisting system 10, here a vision system, is mounted in a motor vehicle and comprises an imaging means 11 for recording images of a region surrounding the motor vehicle, for example a region in front of the motor vehicle. Preferably the imaging means 11 comprises one or more optical and/or infrared imaging devices 12, in particular cameras, where infrared covers near IR with wavelengths below 5 microns and/or far IR with wavelengths beyond 5 microns. Preferably the imaging means 11 comprises a plurality of imaging devices 12 in particular forming a stereo imaging means 11; alternatively only one imaging device forming a mono imaging means can be used.

The imaging means 11 is preferably coupled to an image pre-processor 13 adapted to control the capture of images by the imaging means 11, receive the electrical signal containing the image information from the imaging means 11, warp pairs of left/ right images into alignment and/or create disparity images, which per se is known in the art. The image pre-processor 13 may be realized by a dedicated hardware circuit. Alternatively the pre-processor 13, or part of its functions, can be realized in the electronic processing means 14.

The pre-processed image data is then provided to an electronic processing means 14 where further image and data processing is carried out by corresponding software. In particular, the processing means 14 comprises a real-time processing means 15 which is adapted to perform real-time processing. The real-time processing means 15 comprises an object detection and/or classifying means 16 for identifying and/or classifying possible objects in the surrounding of the motor vehicle, such as pedestrians, other vehicles, bicyclists or large animals. The real-time processing means 15 preferably comprises the following functions: tracking over time the position of identified object candidates in the recorded images; calculation of a collision probability between the vehicle and a detected object; and/or activation or control of at least one driver assisting means 18 depending on the result of the object detection and tracking processing and/or said collision probability calculation.

Real-time processing in the present context in particular relates to a time scale which allows a driver and/or a safety means to react, for example by steering and/or braking, in response to an output provided by the real-time processing means with respect to an object detected by the real-time processing means, in particular in order to avoid a collision or reduce a collision probability.

The driver assisting means 18 may in particular comprise a display means for displaying information relating to a detected object. However, the invention is not limited to a display means. The driver assisting means 18 may in addition or alternatively comprise a warning means adapted to provide a collision warning to the driver by suitable optical, acoustical and/or haptical warning signals; one or more restraint systems such as occupant airbags or safety belt tensioners, pedestrian airbags, hood lifters and the like, and/or dynamic vehicle control systems such as brakes or steering means. The processing means 14 expediently has access to a memory means 25.

The electronic processing means 14 is preferably programmed or programmable and expediently comprises a microprocessor or micro-controller. The image pre-processor 13, the electronic processing means 14 and the memory means 25 are preferably realised in an on-board electronic control unit (ECU) and may be connected to the imaging means 11 via a separate cable or a vehicle data bus. In another embodiment the ECU and an imaging device 12 can be integrated into a single unit. All steps from imaging, image pre-processing, image processing to activation or control of a driver assisting means 18 are performed automatically and continuously during driving in real-time.

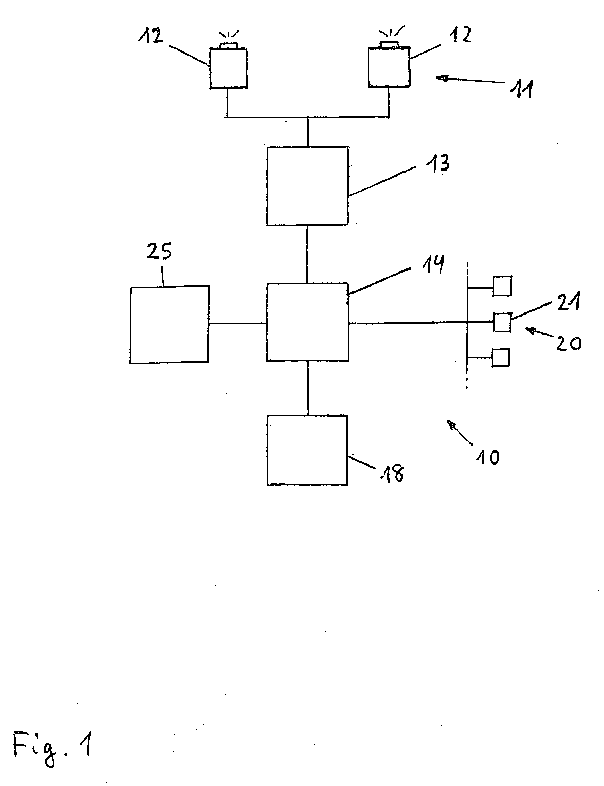

The processing means 14 further comprises a non-real-time evaluating means 17. The processing means 14 is adapted to store objects detected by the object detection means 16 in the memory 25 for later evaluation in the non-real-time evaluating means 17. Together with the detected objects, preferably corresponding sensor data from vehicle-mounted sensors 20 (see Fig. 1) is also stored in the memory 25.

The objects stored in the memory 25 may be evaluated in the evaluating means 17 later in non-real-time, when there is more time and larger processing resources are available. Therefore, a better evaluation result may be obtained in comparison to the fast signal processing in real-time with limited processing resources in the real-time processing means 15.

The evaluating means 17 in particular is adapted to classify evaluated objects as belonging to at least one object category, for example as belonging to a pedestrian or not, and/or as belonging to another object category, for example other vehicle, bicyclist or large animal, or not. The non-real-time classification may then expediently be compared to the real-time classification of the evaluated object in the real-time processing means 15. If the classification by the evaluation means 17 differs from the classification by the real-time processing means 15, the evaluating means 17 advantageously takes further action in order to improve the reliability of future classifications by the real-time processing means 15. In that case, therefore, the evaluating means 17 is in particular adapted to influence the real-time-processing in said real-time processing means 15 in different manners, as will be explained in the following.

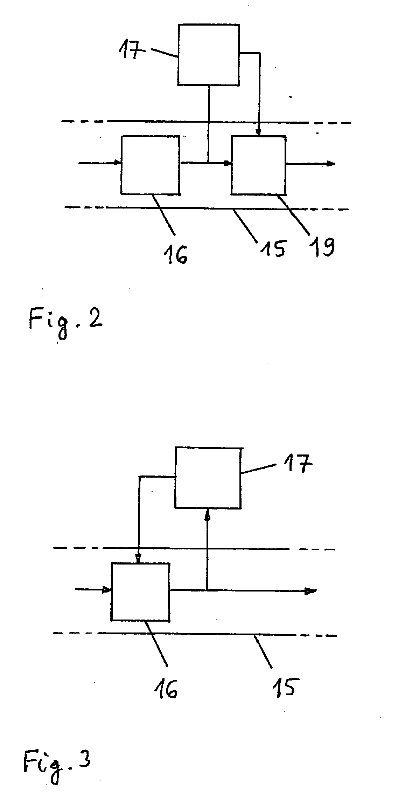

In a first embodiment exemplified by Fig. 2, the evaluating means 17 makes evaluation information available to the real-time processing means 15 in particular by storing it in the memory 25. This allows the real-time processing means 15 to check in real-time objects detected in the object detection means 16. In particular, a classification by real-time classifying means 16 may be overruled if the evaluation information indicates that the detected object has been misclassified by the real-time classifying means 16. Furthermore or alternatively, the real-time processing means 15 preferably comprises a filter means 19 provided for suppressing displaying information relating to a detected object if said evaluation information indicates that the detected object has been misclassified by the real-time classifying means 16.

In this embodiment, said evaluation information preferably comprises an identifying feature of a particular evaluated object, and the real-time processing means 15, in particular the object detection means 16 thereof, is preferably adapted to determine an identifying feature related to a particular detected object. In this case, the real-time processing means 15 advantageously is adapted to compare an identifying feature related to an object detected in real-time to an identification feature of an evaluated object. If the identifying feature related to the detected object corresponds to the identification feature of the evaluated object, the real-time processing means 15 uses, in the processing of a detected object, the evaluation result from the evaluation means 17, rather than a classification by the object classifying means 16.

In order to illustrate this by way of example, suppose that a person drives always the same route daily, for example between home and work. It may be that, for example, a particular traffic sign, when driving past it in a particular direction, is consistently misclassified as a pedestrian by the real-time processing means 15, in particular section 16 thereof. According to the invention a record of the detected object, namely of the traffic sign with classification "pedestrian" is stored in the memory 25 together with information allowing to extract an identifying feature, identifying the object as the particular traffic sign at the specific position when driving past it in the particular direction. This identifying feature may for example be generated from data of a satellite navigation system, or other data from vehicle based sensors 20. When there is idle time, the evaluating means 17 gets the record of the traffic sign with classification "pedestrian" from the memory 25 and evaluates it more carefully with larger processing resources, which enables it to find out that it has been misclassified as a pedestrian and the correct classification is "non-pedestrian". The record of the evaluated traffic sign is then stored again in the memory 25 together with the identifying feature and the correct classification as "non-pedestrian".

The next time when the vehicle passes the same particular traffic sign in the specified direction, the real-time processing means 15 again misclassifies the traffic sign as pedestrian. Then, however, the real-time processing means 15 compares the identifying feature of the detected object to the identifying features of the evaluated objects stored in the memory 25 and detects that there is a record with the same identifying feature stored in the memory 25. The real-time processing means 15 therefore replaces the real-time classification of the detected object as pedestrian by the correct classification as non-pedestrian as stored in the memory 25, and the filter means 19 suppresses the display of the detected object, namely the traffic sign, on the display means 18 on the basis of the corrected classification as non-pedestrian.

The invention is not limited to the above described concept of identifying features for particular objects. For example, the evaluating means 17 may store evaluation results in the memory 25 for typical situations where misclassification occurs, for example under certain weather conditions. The real-time classification may then be corrected on the basis of evaluation information stored in the memory 25 if the real-time processing means 15 detects the presence of such a typical situation.

In an alternative embodiment exemplified in Fig. 3, the real-time classifying means 16 in said real-time processing means 15 may be directly modified on the basis of an evaluation result from said evaluating means 17. In particular, parameters of the real-time classifying algorithm may be modified, for example thresholds in weak learners in the case of a Booster classifier. In this manner, the real-time classification in the real-time processing means 15 can be directly improved.

The non-real-time evaluating means 17 preferably performs the evaluation of the stored object data in idle times, i.e. times of low processing activity in said processing means 14, when the processing means 14 is not occupied with image processing at a normal rate during driving.

For example, the evaluation is preferably performed when the real-time object detection is inoperative. For example in case of a night vision system, the real-time object detection 16 is set inoperative during the daylight hours when the light level in the surrounding of the vehicle is too bright. This may be detected by a vehicle mounted brightness sensor 21. As another example, the evaluation may be performed after the car ignition has been turned off.

Alternatively a scene classifier may be used. The evaluating is preferably performed if the processing means determines that the complexity of the environment is sufficiently low, for example in a highway environment, where lower processing activity can be assumed.

As a further alternative, if the processing level has been low for a certain period of time, it may be assumed that this will continue to be the case and the evaluating may be performed.

## Claims

1. A driver assisting system (10) for a motor vehicle, comprising an imaging means (11) for recording images from a region surrounding the motor vehicle, a real-time processing means (15) for detecting objects in the recorded images by real-time image processing of images recorded by said imaging means (11), and a driver assisting means (18) controlled depending on said image processing, **characterized in that** said driver assisting system (10) comprises a memory (25) for storing object data relating to detected objects, and a non-real-time evaluating means (17) for evaluating said stored object data, wherein said real-time processing means (15) is adapted to influence, based on an evaluation result from said evaluating means (17), the real-time-processing in said real-time processing means (15).

2. The driver assisting system as claimed in claim 1, wherein said evaluating means (17) is adapted to classify evaluated objects as belonging to at least one object category.

3. The driver assisting system as claimed in claim 2, wherein said real-time processing means (15) is adapted to compare the non-real-time classification by said evaluating means (17) to a real-time classification of the evaluated object.

4. The driver assisting system as claimed in claim 3, wherein the real-time-processing in said real-time processing means (15) is influenced if the classification by said evaluating means (17) deviates from the classification by said real-time processing means (15).

5. The driver assisting system as claimed in any one of the preceding claims, wherein said evaluating means (17) is adapted to make evaluation information relating to evaluated objects available to said real-time processing means (15).

6. The driver assisting system as claimed in claim 5, wherein said real-time processing means (15) is adapted to overrule a classification by a real-time classifying means (16) if said evaluation information indicates that the detected object has been misclassified by said real-time classifying means.

7. The driver assisting system as claimed in claim 5 or 6,
wherein said real-time processing means (15) is adapted to suppress the output of information relating to a detected object to said driver assisting means (18) if said evaluation information indicates that the detected object has been misclassified by said real-time classifying means (16).

8. The driver assisting system as claimed in any one of claims 5 to 7, wherein said evaluation information comprises an identifying feature of a particular evaluated object.

9. The driver assisting system as claimed in any one of the preceding claims, wherein said real-time processing means (15) is adapted to determine an identifying feature related to a particular detected object.

10. The driver assisting system as claimed in claims 8 and 9, wherein said real-time processing means (15) is adapted to compare an identifying feature related to a detected object to an identification feature of an evaluated object.

11. The driver assisting system as claimed in claim 10,
wherein said real-time processing means (15) is adapted to use, in the processing of a detected object, an evaluation result related to an evaluated object if the identifying feature related to the detected object corresponds to the identification feature of the evaluated object.

12. The driver assisting system as claimed in any one of the preceding claims, wherein said real-time classifying means (16) in said real-time processing means (15) is modified on the basis of an evaluation result from said evaluating means (17).

13. The driver assisting system as claimed in any one of the preceding claims, wherein non-real-time evaluating means (17) is adapted to perform said evaluating of said stored object data in times of low processing activity.

14. The driver assisting system as claimed in any one of the preceding claims, wherein said evaluation means (17) is adapted to use sensory data from at least vehicle-mounted sensing means (20) stored in said memory (25) together with said object data.

15. A driver assisting method for a motor vehicle, comprising recording images from a region surrounding the motor vehicle, detecting objects in the recorded images by real-time image processing of recorded images, and controlling a driver assisting means depending on said image processing, **characterized by** storing object data relating to detected objects, non-real-time evaluating said stored object data, and influencing said real-time-processing based on an evaluation result from said non-real-time evaluating.
